# EUROPEAN PATENT APPLICATION

(11) **EP 4 335 823 A1**
(43) Date of publication of application: **13.03.2024**
(21) Application number: 22806777.3
(22) Date of filing: 11.05.2022
(51) Int. Cl.: C01G 45/10

(54) **MANGANESE SULFATE PURIFICATION AND CRYSTALLIZATION METHOD**

(30) Priority: 14.05.2021 CN 202110524889
(71) Applicant: SVOLT ENERGY TECHNOLOGY CO., LTD, Changzhou, Jiangsu 213200 (CN)
(72) Inventor: WAN, Jiangtao, hangzhou, Jiangsu 213200 (CN); ZHANG, Ning, hangzhou, Jiangsu 213200 (CN); ZHANG, Yongjie, hangzhou, Jiangsu 213200 (CN); LIU, Manku, hangzhou, Jiangsu 213200 (CN); LI, Zitan, hangzhou, Jiangsu 213200 (CN)
(74) Representative: Groth & Co. KB
(86) International application number: PCT/CN2022/092118
(87) International publication number: WO 2022/237814

(57) **Abstract**

The present invention provides a manganese sulfate purification and crystallization method. The use amount and the type number of impurity removal agents used in the method of the present invention are small, a filtrate obtained after crystallization and filtration is distilled, recovered ethanol is used for circulating crystallization, a distilled liquid is used as a manganese slag leaching base solution again to be added into a reaction kettle, and sulfuric acid is added again for preparing a manganese sulfate solution by means of cyclic leaching. The process is simple and easy to implement, the additive amount is small, high-temperature crystallization is not needed, and process costs are greatly reduced.

## Description

### TECHNICAL FIELD

The present disclosure relates to the field of resource recovery, for example, relates to a method for purifying and crystallizing manganese sulfate.

### BACKGROUND

Wet smelting involves the comprehensive utilization of manganese resources in processes such as nickel cobalt ore treatment, battery material recovery and manganese ore leaching. The most common processed product of these manganese resources is manganese sulfate crystals, which is one of the important raw materials for new energy battery materials, and the production requirements for battery grade manganese sulfate are also relatively high.

It is difficult to obtain high-quality manganese sulfate from ordinary manganese sulfate materials, since various impurities cannot be effectively removed, and a crystallization recovery rate is low, the following several methods are mainly used in a preparation process of high-purity manganese sulfate: a, various impurity removal agents are added for deep impurity removal, and then manganese sulfate is produced by high-temperature crystallization; b, high-purity manganese sulfate is produced through multiple recrystallization; and c, impurity removal is carried out by extraction, and a manganese sulfate solution is concentrated after deep purification for crystallization. In the above impurity removal methods, the use amount and type number of additives are large, and the requirements of high-temperature crystallization for devices are high. Although the process of multiple recrystallization obtains the high-purity manganese sulfate, the yield is only about 65%, the process of extraction, impurity removal and crystallization requires the addition of an extraction line, the costs and investment are both high, and cost reduction and efficiency improvement are not facilitated.

### SUMMARY OF THE INVENTION

An example of the present disclosure provides a method for purifying and crystallizing manganese sulfate, including the following steps:
(1) mixing a manganese-containing substance to be treated with sulfuric acid, adding a reducing agent for reduction leaching, removing iron by oxidation, and then removing heavy metal with a sulfide to obtain a solution without impurity; and
(2) oxidizing the solution without impurity obtained in step (1) to precipitate manganese and obtain a manganese slag, carrying out reduction leaching after redissolving the manganese slag, and then performing crystallization treatment to obtain manganese sulfate.

The present disclosure does not limit the source and state of the manganese-containing substance to be treated, for example, it may be various manganese slag or manganese solutions.

The method provided in an example of the present disclosure adopts a sulfide as a heavy metal precipitator, which has a good heavy metal removal effect and significantly reduces the use amount of an impurity removal agent, manganese is precipitated and separated out by using an oxidation precipitation method, and meanwhile calcium, magnesium, sodium, potassium and chloride ions, etc. are left in a post-precipitation solution. The calcium and magnesium ions in a system do not need to be removed by additional impurity removal agents, and a manganese slag after precipitation to remove various impurities is adopted to prepare a manganese-containing solution through redissolving for crystallization.

In one example, a metal source in step (1) includes any one or a combination of at least two of Ti, Zr, Mg, Zn, Al, W, Nb, Sr or Y oxides, a nitrate, a carbonate and a sulfate.

In one example, the reducing agent in step (1) is a sulfite salt, and an amount of the sulfite salt added is 110% to 130% of a molar amount of manganese element, such as 110%, 115%, 120%, 125% or 130%.

In one example, the reduction leaching in step (1) is carried out at a temperature ranging from 40°C to 80°C, such as 40°C, 50°C, 60°C, 70°C or 80°C.

In one example, the reduction leaching in step (1) is carried out for a time period ranging from 1 h to 5 h, such as 1 h, 2 h, 3 h, 4 h or 5 h.

In one example, a manganese concentration of the reduction leaching in step (1) is controlled to be less than 50 g/L, such as 45 g/L, 40 g/L, 38 g/L, 30 g/L, 25 g/L or 22 g/L.

Controlling the concentration of manganese during the reduction leaching to be less than 50 g/L may ensure almost no loss of manganese during impurity removal.

In one example, the removing iron by oxidation in step (1) includes introducing compressed, adjusting pH, increasing temperature, and filtering.

In one example, the compressed air is introduced in an amount of 0.1 to 5 times the volume of the solution per hour, such as 0.1 time the volume of the solution per hour, 1 time the volume of the solution per hour, 2 times the volume of the solution per hour, 3 times the volume of the solution per hour, 4 times the volume of the solution per hour or 5 times the volume of the solution per hour.

In one example, the compressed air is introduced for a time period ranging from 60 min to 120 min, such as 60 min, 80 min, 90 min, 100 min or 120 min.

In one example, the pH is adjusted to be in a range from 1.5 to 2.5, such as 1.5, 1.8, 2, 2.2 or 2.5.

In one example, the temperature is increased to be in a range from 75°C to 85°C, such as 75°C, 78°C, 80°C, 83°C or 85°C.

In one example, the pH of during removing heavy metal with a sulfide in step (1) is in a range from 4.0 to 5.0, such as 4.0, 4.2, 4.5, 4.8 or 5.0.

In one example, the removing heavy metal with a sulfide in step (1) is carried out at a temperature ranging from 50°C to 80°C, such as 50°C, 60°C, 65°C, 70°C, 75°C or 80°C.

In one example, the sulfide used in the removing heavy metal with a sulfide in step (1) includes any one or a combination of at least two of magnesium sulfide, sodium sulfide, calcium sulfide and barium sulfide, and an amount of the sulfide added is 2 to 5 times the molar amount of the manganese element, such as 2 times, 3 times, 4 times or 5 times.

The method provided in one example of the present disclosure has already precipitated a large amount of heavy metal impurities after pre-adjusting pH to be in a range from 4.0 to 5.0, the remaining small amount of impurities are precipitated and removed by adding 2-5 times the sulfides, and the use amount of the impurity removal agent is greatly reduced.

In one example, the oxidizing to precipitate manganese in step (2) includes introducing oxygen, increasing temperature, adjusting pH, filtering and washing, and a reagent adopted in the redissolving is concentrated sulfuric acid.

Adopting the concentrated sulfuric acid as the reagent of reverse dissolution may prepare a high-concentration manganese sulfate solution after purification, avoiding introducing impurities again.

In one example, the temperature is increased to be in a range from 75°C to 85°C, such as 75°C, 78°C, 80°C, 82°C or 85°C.

In one example, the pH is adjusted to be in a range from 5.0 to 6.0, such as 5.0, 5.2, 5.5, 5.8 or 6.0.

In one example, the washing includes washing with acid and washing with water.

In one example, the reducing agent in the reduction leaching in step (2) includes hydrogen peroxide.

In one example, the reduction leaching in step (2) is carried out at a temperature ranging from 40°C to 50°C, such as 40°C, 42°C, 45°C, 48°C or 50°C.

In one example, the reduction leaching in step (2) is carried out for a time period ranging from 1 h to 5 h, such as 1 h, 2 h, 3 h, 4 h or 5 h.

In one example, the pH during the reduction leaching in step (2) is in a range from 1.0 to 1.5, such as 1.0, 1.1, 1.2, 1.3, 1.4 or 1.5.

In one example, a concentration of manganese sulfate after the reduction leaching in step (2) is in a range from 580 g/L to 630 g/L, such as 580 g/L, 590 g/L, 600 g/L, 610 g/L, 620 g/L or 630 g/L.

In one example, the crystallization treatment in step (2) includes adding ethanol, carrying out stirring to precipitate manganese sulfate, and carrying out filtering.

In one example, a volume of the ethanol is 0.2 to 2 times a volume of the solution without impurity, such as 0.2 time, 0.5 time, 0.8 time, 1 time, 1.5 times or 2 times.

In one example, the stirring is carried out for a time period ranging from 0.3 h to 1 h, such as 0.3 h, 0.5 h, 0.7 h, 0.9 h or 1 h.

During crystallization, ethanol is added into the manganese sulfate solution for crystallizing and precipitating manganese sulfate, manganese slag waste is purified and effectively converted into manganese sulfate, and the ethanol may be distilled and reused. The process is simple and easy to implement, the additive amount is small, high-temperature crystallization is not needed, and process costs are greatly reduced.

### DETAILED DESCRIPTION

### Example 1

This example provides a method for purifying and crystallizing manganese sulfate, including the following steps:
(1) a manganese-containing substance to be treated is mixed with sulfuric acid, then sodium sulfite with 110% manganese element amount is added for reduction leaching at 50°C for 4 h, and a concentration of manganese is controlled to be less than 50 g/L; (2) compressed air of 1 time the volume of the solution per hour is introduced, an oxidation reaction is carried out for 120 min, then pH is adjusted to be 1.5, a temperature is increased to 80°C to precipitate iron, and filtering is carried out, pH of the solution is adjusted to be 4.0 with ammonium hydroxide, and 4 times of magnesium sulfide is added for reacting at 50°C to remove heavy metals, and filtering is carried out to obtain a solution without impurity;
(3) oxygen is continuously introduced into the solution without impurity, the temperature is increased to 80°C, pH is adjusted to be 6.0 with the ammonium hydroxide to oxidize and precipitate manganese, and the precipitate is filtered and washed once with 0.5 time the volume of 1% dilute sulfuric acid, and then is cleaned with 2 times the volume of pure water to obtain a manganese slag;
(4) the cleaned manganese slag is added into concentrated sulfuric acid, a reducing agent hydrogen peroxide (hydrogen peroxide) is added for reduction leaching at 50°C for 2 h, an endpoint is pH=1.0, and a small amount of residual acid is neutralized with manganese carbonate to ensure that the concentration of manganese sulfate in a leaching solution reaches 580 g/L; and
(5) 1.8 times the volume of ethanol is added into the solution obtained in step (4) at a room temperature for stirring for 0.5 h to separate out a manganese sulfate precipitate, the precipitate is filtered and washed with ethanol, then solid-liquid separation is carried out to prepare a manganese sulfate crystal, mother liquor is distilled, with a distillation temperature controlled to be 78°C, ethanol is separated from water for reuse, the concentration of the distilled ethanol is 95%, a single manganese precipitation amount is 90.5%, the prepared manganese sulfate crystal meets the requirements for battery grade impurity content, and the filtered sulfide precipitates are collected and stored in a centralized mode.

### Example 2

This example provides a method for purifying and crystallizing manganese sulfate, including the following steps:
(1) a manganese-containing substance to be treated is mixed with sulfuric acid, then sodium sulfite with 120% manganese element amount is added for reduction leaching at 50°C for 4 h, and a concentration of manganese is controlled to be less than 50 g/L;
(2) compressed air of 2 times the volume of the solution per hour is introduced, an oxidation reaction is carried out for 90 min, then pH is adjusted to be 2.5, a temperature is increased to 80°C to precipitate iron, and filtering is carried out, pH of the solution is adjusted to be 5.0 with ammonium hydroxide, and 3 times of sodium sulfide is added for reacting at 60°C to remove heavy metals, and filtering is carried out to obtain a solution without impurity;
(3) oxygen is continuously introduced into the solution without impurity, the temperature is increased to 80°C, pH is adjusted to be 5.5 with the ammonium hydroxide to oxidize and precipitate manganese, and the precipitate is filtered and washed once with 1 time the volume of 3% dilute sulfuric acid, and then is cleaned with 1 time the volume of pure water to obtain a manganese slag;
(4) the cleaned manganese slag is added into concentrated sulfuric acid, a reducing agent hydrogen peroxide is added for reduction leaching at 40°C for 3 h, an endpoint is pH=1.5, a small amount of residual acid is neutralized with manganese carbonate to ensure that the concentration of manganese sulfate in a leaching solution reaches 600 g/L; and
(5) 1.5 times the volume of ethanol is added into the solution obtained in step (4) at a room temperature for stirring for 0.5 h to separate out a manganese sulfate precipitate, the precipitate is filtered and washed with ethanol, then solid-liquid separation is carried out to prepare a manganese sulfate crystal, mother liquor is distilled, with a distillation temperature controlled to be 82°C, ethanol is separated from water for reuse, the concentration of the distilled ethanol is 95%, a single manganese precipitation amount is 91.5%, the prepared manganese sulfate crystal meets the requirements for battery grade impurity content, and the filtered sulfide precipitates are collected and stored in a centralized mode.

### Example 3

This example provides a method for purifying and crystallizing manganese sulfate, including the following steps:
(1) a manganese-containing substance to be treated is mixed with sulfuric acid, then sodium sulfite with 130% manganese element amount is added for reduction leaching at 60°C for 2 h, and a concentration of manganese is controlled to be less than 50 g/L;
(2) compressed air of 3 times the volume of the solution per hour is introduced, an oxidation reaction is carried out for 120 min, then pH is adjusted to be 2.0, a temperature is increased to 80°C to precipitate iron, and filtering is carried out, pH of the solution is adjusted to be 4.5 with ammonium hydroxide, and 2.5 times of sodium sulfide is added for reacting at 70°C to remove heavy metals, and filtering is carried out to obtain a solution without impurity;
(3) oxygen is continuously introduced into the solution without impurity, the temperature is increased to 80°C, pH is adjusted to be 6.0 with the ammonium hydroxide to oxidize and precipitate manganese, and the precipitate is filtered and washed once with 1 time the volume of 5% dilute sulfuric acid, and then is cleaned with 2 times the volume of pure water to obtain a manganese slag;
(4) the cleaned manganese slag is added into concentrated sulfuric acid, a reducing agent hydrogen peroxide is added for reduction leaching at 40°C for 3 h, an endpoint is pH=1.3, and a small amount of residual acid is neutralized with manganese carbonate to ensure that the concentration of manganese sulfate in a leaching solution reaches 620 g/L; and
(5) 2 times the volume of ethanol is added into the solution obtained in step (4) at a room temperature for stirring for 0.5 h to separate out a manganese sulfate precipitate, the precipitate is filtered and washed with ethanol, then solid-liquid separation is carried out to prepare a manganese sulfate crystal, mother liquor is distilled, with a distillation temperature controlled to be 85°C, ethanol is separated from water for reuse, the concentration of the distilled ethanol is 95%, a single manganese precipitation amount is 92%, the prepared manganese sulfate crystal meets the requirements for battery grade impurity content, and the filtered sulfide precipitates are collected and stored in a centralized mode.

### Example 4

The difference between this example and Example 1 is only that the amount of magnesium sulfide added in step (2) is 2 times the amount, and other conditions and parameters are completely the same as those of Example 1.

The single manganese precipitation amount is 90.5%. The content of heavy metal impurities in manganese is increased by 0.1%.

### Example 5

The difference between this example and Example 1 is only that the amount of magnesium sulfide added in step (2) is 5 times the amount, and other conditions and parameters are completely the same as those of Example 1.

The single manganese precipitation amount is 89.5%. The content of heavy metal impurities in manganese is reduced by 0.01%.

### Example 6

The difference between this example and Example 1 is only that dilute sulfuric acid is used in step (4), and other conditions and parameters are completely the same as those of Example 1.

The single manganese precipitation amount is 90.5%. The concentration of a final manganese sulfate solution after using the dilute sulfuric acid cannot reach crystallization requirements, which is not conducive to concentrating the manganese sulfate solution.

### Comparative Example 1

The difference between this comparative example and Example 1 is only that magnesium sulfide is not added in step (2), and other conditions and parameters are completely the same as those of Example 1.

The single manganese precipitation amount is 90.5%. Without adding the sulfides, the total amount of heavy metal impurities in a final manganese sulfate product will be increased by 0.8%.

### Comparative Example 2

The difference between this comparative example and Example 1 is only that sodium hydroxide is added in step (3) for manganese precipitation, and other conditions and parameters are completely the same as those of Example 1. The total amount of heavy metal impurities in a final manganese sulfate product will be increased by 0.5%, and the single manganese precipitation amount is 90.5%.

It may be seen from Examples 1 to 6 that in the method of the present disclosure, the single manganese precipitation amount may reach more than 90.5%, and the prepared manganese sulfate crystal meets the requirements of battery grade impurity content.

It may be seen from comparison between Example 1 and Examples 4 to 5 that the amount of the sulfides added may affect the manganese precipitation amount, the additive amount of the sulfides is controlled to be 2 to 5 times, the manganese precipitation amount may be increased to the maximum content, and meanwhile the heavy metal impurity content in manganese is reduced.

It may be seen from comparison between Example 1 and Example 6 that the concentration of a final manganese sulfate solution after using the dilute sulfuric acid cannot reach crystallization requirements, which is not conducive to concentrating the manganese sulfate solution.

It may be seen from comparison between Example 1 and Comparative Example 1 that without adding the sulfides, the total amount of heavy metal impurities in a final manganese sulfate product will be increased.

It may be seen from comparison between Example 1 and Comparative Example 2 that other methods are used to precipitate manganese, and the total amount of heavy metal impurities in a final manganese sulfate product will be increased.

## Claims

1. A method for purifying and crystallizing manganese sulfate, comprising the following steps:
(1) mixing a manganese-containing substance to be treated with sulfuric acid, adding a reducing agent for reduction leaching, removing iron by oxidation, and then removing heavy metal with a sulfide to obtain a solution without impurity; and
(2) oxidizing the solution without impurity obtained in step (1) to precipitate manganese and obtain a manganese slag, carrying out reduction leaching after redissolving the manganese slag, and then performing crystallization treatment to obtain manganese sulfate.

2. The method of claim 1, wherein the reducing agent in step (1) is a sulfite salt, and an amount of the sulfite salt added is 110% to 130% of a molar amount of manganese element.

3. The method of any one of claims 1 to 2, wherein the reduction leaching in step (1) is carried out at a temperature ranging from 40°C to 80°C for a time period ranging from 1 h to 5 h, and a concentration of manganese during the reduction leaching is controlled to be less than 50 g/L.

4. The method of any one of claims 1 to 3, wherein the removing iron by oxidation in step (1) comprises introducing compressed air, adjusting pH, increasing temperature, and filtering.

5. The method of claim 4, wherein the compressed air is introduced in an amount of 0.1 to 5 times the volume of the solution per hour for a time period ranging from 60 min to 120 min, the pH is adjusted to be in a range from 1.5 to 2.5, and the temperature is increased to be in a range from 75°C to 85°C.

6. The method of any one of claims 1 to 5, wherein the pH during removing heavy metal with a sulfide in step (1) is in a range from 4.0 to 5.0.

7. The method of any one of claims 1 to 6, wherein the removing heavy metal with a sulfide in step (1) is carried out at a temperature ranging from 50°C to 80°C.

8. The method of any one of claims 1 to 7, wherein the sulfide used in the removing heavy metal with a sulfide in step (1) comprises any one or a combination of at least two of magnesium sulfide, sodium sulfide, calcium sulfide and barium sulfide, and an amount of the sulfide added is 2 to 5 times the molar amount of manganese element.

9. The method of any one of claims 1 to 8, wherein the oxidizing to precipitate manganese in step (2) comprises introducing oxygen, increasing temperature, adjusting pH, filtering and washing, and a reagent adopted during the redissolving is concentrated sulfuric acid.

10. The method of claim 9, wherein the temperature is increased to be in a range from 75°C to 85°C, the pH is adjusted to be in a range from 5.0 to 6.0, and the washing comprises washing with an acid and washing with water.

11. The method of any one of claims 1 to 10, wherein the reducing agent in the reduction leaching in step (2) comprises hydrogen peroxide.

12. The method of any one of claims 1 to 11, wherein the reduction leaching in step (2) is carried out at a temperature ranging from 40°C to 50°C for a time period ranging from 1 h to 5 h.

13. The method of any one of claims 1 to 12, wherein the pH during the reduction leaching in step (2) is in a range from 1.0 to 1.5.

14. The method of any one of claims 1 to 13, wherein a concentration of manganese sulfate after the reduction leaching in step (2) is in a range from 580 g/L to 630 g/L.

15. The method of any one of claims 1 to 14, wherein the crystallization treatment in step (2) comprises adding ethanol, carrying out stirring to precipitate manganese sulfate, and filtering, wherein a volume of the ethanol is 0.2 to 2 times the volume of the solution without impurity, and the stirring is carried out for a time period ranging from 0.3 h to 1 h.
